# EUROPEAN PATENT SPECIFICATION

(11) **EP 3 797 851 B1**
(45) Date of publication and mention of the grant of the patent: **07.01.2026**
(21) Application number: 19821659.0
(22) Date of filing: 12.06.2019
(51) Int. Cl.: B01D 46/42, B01D 46/00

(54) **FILTER REPLACEMENT METHOD, FILTER DEVICE, AUTOMATIC WET-DOWN SYSTEM**
VERFAHREN ZUM ERSETZEN EINES FILTERS, FILTERVORRICHTUNG, AUTOMATISCHES WÄSSERUNGSSYSTEM
PROCÉDÉ DE REMPLACEMENT DE FILTRE, DISPOSITIF DE FILTRAGE, SYSTÈME D'HUMIDIFICATION AUTOMATIQUE

(30) Priority: 19.06.2018 JP 2018115977
(43) Date of publication of application: 31.03.2021
(73) Proprietor: Horkos Corp, Fukuyama-shi, Hiroshima 720-8650 (JP); TEC Project Services Corporation, Narashino-shi Chiba 275-0024 (JP)
(72) Inventor: FUKUSHIMA Daiji, Fukuyama-shi, Hiroshima 720-2413 (JP); SHIME Hideki, Narashino-shi, Chiba 275-0024 (JP); KOCHIHIRA Asafumi, Narashino-shi, Chiba 275-0024 (JP); YAMAGUCHI Yoshitaka, Narashino-shi, Chiba 275-0024 (JP)
(74) Representative: Kramer Barske Schmidtchen Patentanwälte PartG mbB
(86) International application number: PCT/JP2019/023281
(87) International publication number: WO 2019/244745

(56) References cited:
- CN-A- 107 131 586
- JP-A- 2003 200 014
- JP-A- 2007 307 448
- JP-A- 2008 018 297
- JP-A- 2010 051 852
- JP-B2- 5 674 609
- US-A- 5 902 383

## Description

### TECHNICAL FIELD

The present invention relates to a method for replacing a used filter with a new filter in a filter apparatus that collects, for example, dust in a fluid.

### BACKGROUND ART

For example, in a manufacturing site of a pharmaceutical facility, a dust collection apparatus is used to collect dust that is generated when a highly active pharmaceutical substance, which is a pharmaceutical raw material or an agricultural chemical raw material, is handled. Although the most part of the dust is collected by the dust collection apparatus, it is difficult to completely collect 100% of the dust in actuality, and a small part of the dust is discharged from the dust collection apparatus without being collected. However, the highly active pharmaceutical substance adversely affects the human body even in a small amount. Thus, it is necessary to recollect a very small amount of dust discharged from the dust collection apparatus to make every effort in terms of health and safety. In view of this, as dust re-collecting means, a filter apparatus incorporating therein a high-performance filter, such as a High Efficiency Particulate Air filter (HEPA filter) or an Ultra Low Penetration Air filter (ULPA filter), is installed in a stage following the dust collection apparatus. The filter apparatus is connected to the dust collection apparatus through a duct.

The filter apparatus typically includes a housing, a filter housed in the housing, an inlet portion that introduces a fluid to be filtered into the housing, and a discharge portion that discharges the fluid filtered by the filter. The fluid discharged from the dust collection apparatus passes through the duct and is introduced to the inside of the filter apparatus through the inlet portion, and dust remaining in the fluid is re-collected by the filter. The fluid from which dust has been removed is discharged as a clean fluid through the discharge portion.

The filter becomes clogged by repetition of dust collection. Thus, the filter needs to be replaced after used for a certain period of time. In replacing the filter, it is necessary to exercise utmost caution so as to prevent exposure of an operator caused by the flying of dust adhering to the used filter. A method called Bag-in/Bag-out is one of conventional filter replacement methods that take prevention of exposure into consideration. A schematic procedure thereof is as follows.

First, a door of the filter apparatus is opened, and, by using a plastic bag that has been attached to a filter takeout port at the time of previous replacement, the used filter is taken out through the bag and collected into the plastic bag. Then, the bag is tied in two places, and an intermediate part thereof is cut. Accordingly, the used filter is sealed in one plastic bag, and the takeout port is sealed with the other plastic bag. Then, a plastic bag in which a new filter is housed is attached to the filter takeout port, the plastic bag that has been left for sealing is collected, and the new filter is inserted to the inside of the apparatus through the bag. The collected plastic bag may be kept inside the bag until the next filter replacement or may be taken out of the bag and discarded. At last, the door of the filter apparatus is closed to finish the filter replacement operation. According to such a method, since the filter replacement is performed through the plastic bag, the used filter is not exposed to an open space, and exposure caused by the flying of dust can be prevented.

However, in the Bag-in/Bag-out method described above, since it is necessary to take out and insert the filters through the plastic bag in filter replacement, the workability is extremely bad, and it takes time for replacement. Moreover, when the used filter is exposed due to an operation error, there is a risk of exposure of the operator. Furthermore, since plastic bags, which are consumables, are required, running cost is required, and a space for storing the bags is also required.

On the other hand, there is a method that wets a used filter by spraying the filter with a liquid at the time of replacing the filter to prevent the flying of dust adhering to the filter. This method is called Wet-Down. For example, Patent Literatures 1 to 4 listed below disclose methods in which a lower surface (the surface on the upstream side of an air current) of a filter is washed by spraying a washing water to the inside of a filter apparatus through a water feeding pipe, and the filter is then taken out and replaced with a new filter. Taking out the used filter after performing the Wet-Down process in this manner makes it possible to reduce the flying of dust adhering to the filter to prevent exposure because the filter is in a wet state.

Incidentally, conventional pharmaceutical facilities rarely have a dust collection apparatus installed in a manufacturing site, which is a dust generating place. This is because the dust collection apparatus narrows a work place and also causes a risk that dust of a highly active pharmaceutical substance may be mixed into a manufacturing line, for example, during filter replacement. Moreover, most conventional dust collection apparatuses are large and fixed type apparatuses. Thus, the distance between the dust generating place and the place where the dust collection apparatus is installed inevitably becomes long. Therefore, it is necessary to connect the dust generating place and the dust collection apparatus through a long duct that is disposed above or on a ceiling. However, dust of the highly active pharmaceutical substance remains inside the duct and may fly off to the inside or the outside of the facility for some reason.

One means for solving this problem is a mobile dust collection apparatus that can be carried with hands to the dust generating place. This eliminates the necessity of the long duct that connects the dust generating place and the dust collection apparatus and makes it possible to reduce the flying of the highly active pharmaceutical substance remaining inside the duct to reduce the risk of exposure. A short duct can be carried together with the apparatus to a washing place inside the facility, and can be detached and washed in the washing place or can also be discarded.

On the other hand, in facilities where highly active pharmaceutical substances are handled, it is essential to use a high-performance filter, such as the HEPA filter. The filter may be incorporated in a case and installed separately from the dust collection apparatus, or may be incorporated in the dust collection apparatus and constitutes a part of the dust collection apparatus. In particular, in conventional dust collection apparatuses, a bag filter is often used as the filter. Since the bag filter has a lower passing air velocity than the HEPA filter or the like, it is difficult to downsize the apparatus while ensuring a large air flow rate. Thus, the dust collection apparatus inevitably becomes a large and fixed type apparatus, and the high-performance filter is often incorporated in such a dust collection apparatus. Therefore, in conventional techniques, the necessity of unitizing (modularizing) the filter itself standalone and making the filter mobile is low, and, even when doing so, downsizing the apparatus to an absolute minimum is not taken into consideration. JP 5674609 B2 discloses a dust collecting apparatus and a method of cleaning the dust collecting apparatus.

### CITATIONS LIST

### PATENT LITERATURE

Patent Literature 1: JP 2010-51852 A
Patent Literature 2: JP 2009-50831 A
Patent Literature 3: JP 2013-2922 A
Patent Literature 4: JP 2015-121561 A

### SUMMARY OF INVENTION

### TECHNICAL PROBLEMS

According to the methods of Patent Literatures 1 to 4, it is not necessary to replace the filter using a plastic bag like the Bag-in/Bag-out method, which improves the workability. However, even when a washing water is sprayed to the inside of the apparatus in which the filter is housed through a water feeding pipe such as a hose, there is no guarantee that the washing water is uniformly distributed to the entire area of a dust-adhering surface of the filter, and it is virtually impossible to uniformly wet the entire area of the filter. One reason thereof is that it is difficult to accurately grasp the wet state of the filter by visual check. Thus, dust remaining in a place where the filter is not wet may fly off again at the time of taking the filter out, which may cause exposure. Moreover, since a space for spraying water is required, there is a limit to downsizing of the apparatus.

The present invention solves the above problems, and an object thereof is to provide a filter replacement method that is excellent in workability and also has no possibility of the re-flying of dust adhering to a filter. It is another object of the present invention to provide a filter apparatus that is ultimately downsized and makes it easy to uniformly wet the dust-adhering surface of the filter.

### SOLUTIONS TO PROBLEMS

The inventors of the present invention have pursued how to downsize a filter apparatus to an absolute minimum with achieving a mobile filter apparatus like the above dust collection apparatus as a starting point. Moreover, various studies have been conducted in view of minimizing the difference between the volume inside the apparatus and a volume occupied by the filter, reducing water required for Wet-Down, and simplifying pressure resistance (watertightness) of the apparatus to some extent. As a result, the inventors have conceived a new idea of not wetting the filter by spraying water like the conventional Wet-Down, but wetting the filter by bringing the filter itself into a submerged state and completed the present invention.

Although Wet-Down itself is a method already prevalent in the industry, many conventional Wet-Down methods employ a mechanism that wets a filter or a contaminated surface inside a machine using a spray ball or the like. However, it is difficult to uniformly wet the entire area of the filter or the contaminated surface inside a complicated internal machine structure because confirmation by visual check cannot be sufficiently performed. The present invention solves this problem and proposes filter replacement that does not require Bag-in/Bag-out.

A filter replacement method according to the present invention is a filter replacement method as specified in claim 1 or claim 8.

A filter apparatus according to the present invention includes the features specified in claim 9.

The present invention is characterized by wetting the filter in a submerged state (Wet), then opening the filter to a space (Open), and then replacing the filter (Change). Such a method will be referred to as "Wet Open Change" (WOC) in the present specification.

### ADVANTAGEOUS EFFECTS OF INVENTION

According to the filter replacement method of the present invention, a Wet-Down process is performed by injecting the liquid into the housing of the filter apparatus to bring the filter into a submerged state. Thus, it is possible to uniformly wet the entire area of the dust-adhering surface of the filter. Therefore, it is possible to prevent the re-flying of dust adhering to the used filter during filter replacement. Furthermore, after the Wet-Down process, a part of the housing is detached to expose the wet filter to the open space, and the filter is replaced in this state. This makes it extremely easy to perform the replacement operation and also makes it easy to check whether the new filter has been normally set. In addition, even when the filter is exposed in this manner, there is no risk of exposure because the dust-adhering surface of the filter is uniformly wet.

According to the filter apparatus of the present invention, the liquid is injected so as to immerse the entire area of the dust-adhering surface of the filter to wet the filter in a submerged state. Thus, it is possible to easily bring the dust-adhering surface into a uniformly wet state. Furthermore, the liquid should be injected only by an amount that brings the filter into a submerged state. Thus, the amount of liquid required for Wet-Down is reduced. In addition, a space for spraying water as provided in the conventional apparatus is not required. This makes it possible to minimize the difference between the internal volume of the housing and the volume occupied by the filter and thus downsize the apparatus to an absolute minimum.

### BRIEF DESCRIPTION OF DRAWINGS

Fig. 1 is an external view illustrating an example of a filter apparatus of the present invention.
Fig. 2 is a front view illustrating a usage example of the filter apparatus.
Fig. 3 is a sectional view illustrating the structure of a principal part of the filter apparatus.
Fig. 4 is a diagram describing a procedure of a filter replacement method of the present invention (liquid injection).
Fig. 5 is a diagram describing the procedure (liquid filling).
Fig. 6 is a diagram describing the procedure (liquid discharge).
Fig. 7 is a diagram describing the procedure (filter wetting).
Fig. 8 is a diagram describing the procedure (housing detachment).
Fig. 9 is a diagram describing the procedure (filter exposure).
Fig. 10 is a diagram describing the procedure (filter replacement).
Fig. 11 is a flowchart illustrating the procedure.
Fig. 12 is a diagram illustrating another example of the liquid filling.
Fig. 13 is a diagram illustrating another example of the filter wetting.
Fig. 14 is a sectional view illustrating another example of the filter apparatus, which is not covered by the claims.
Fig. 15 is a sectional view illustrating another example of the filter apparatus of the present invention.
Fig. 16 is a diagram illustrating another example of the liquid filling, which is not covered by the claims.
Fig. 17 is a diagram illustrating another example of the filter wetting, which is not covered by the claims.
Fig. 18 is a sectional view illustrating another example of the filter apparatus of the present invention.
Fig. 19 is a diagram illustrating an example of a Wet-Down system of the present invention.
Fig. 20 is a flowchart illustrating another example of the filter replacement procedure.

### DESCRIPTION OF EMBODIMENTS

Hereinbelow, embodiments of the present invention will be described with reference to the drawings. Identical reference signs designate identical or corresponding parts throughout the drawings.

### <First Embodiment>

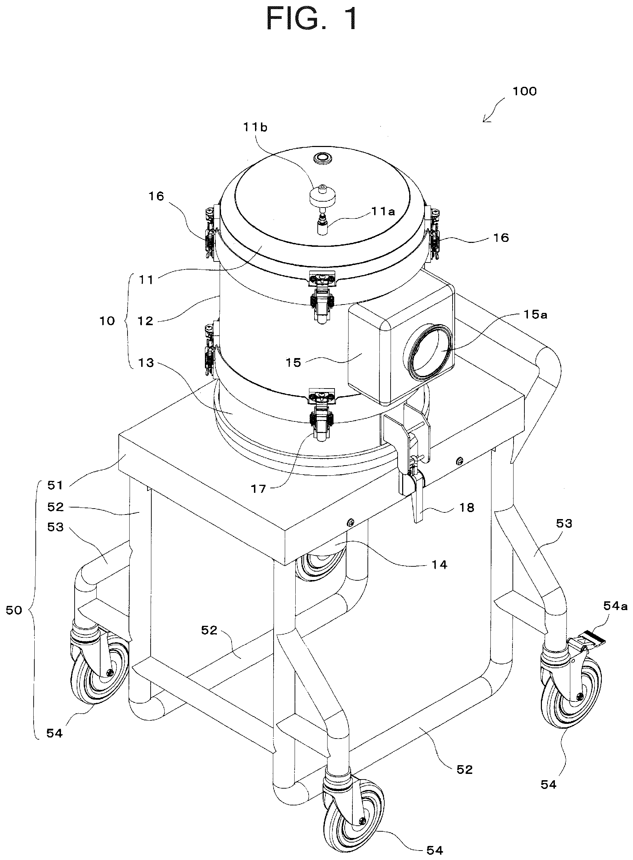

Fig. 1 illustrates an example of a filter apparatus of the present invention. Fig. 1 is an external view of the entire apparatus. A filter apparatus 100 includes a housing 10 in which a filter (described below) is housed and a support base 50 which supports the housing 10.

In the present example, the housing 10 includes an upper housing 11, an intermediate housing 12, and a lower housing 13. The upper housing 11 and the intermediate housing 12 are detachably coupled to each other with a coupling member 16 such as a catch clip. The lower housing 13 and the intermediate housing 12 are also detachably coupled to each other with a coupling member 17 such as a catch clip. The housing 10 can be divided into the three housings 11 to 13 by releasing the coupling with the coupling members 16, 17. Annular seal members (not illustrated) are disposed in joint parts between the housings 11 to 13. The joint parts are sealed in a state where the housings 11 to 13 are coupled to each other with the coupling member 16, 17. By using catch clips as the coupling member 16, 17, a lower cost and a smaller size can be achieved than when, for example, a ferrule joint is used. Furthermore, a catch clip is easy to operate and thus also suitable for a frequent disassembly operation.

The intermediate housing 12 is provided with a discharge portion 15 which discharges a fluid filtered by the filter. The discharge portion 15 includes a discharge port 15a which communicates with an internal space of the housing 10. A duct (described below) is connected to the discharge port 15a.

The lower housing 13 is provided with an inlet portion 14 which introduces a fluid to be filtered into the housing 10. A fluid containing dust introduced through the inlet portion 14 is filtered by the filter housed in the housing 10 and discharged through the discharge port 15a of the discharge portion 15 (details will be described below). In the present example, since an HEPA filter is used as described below, the fluid to be handled is gas (air). However, it is needless to say that the fluid to be handled is not limited to gas and may be liquid or vapor depending on filters.

In the present example, the support base 50 includes a table 51, a frame 52, a leg 53, and a caster 54. The table 51 includes a circular opening (not illustrated) in a central part thereof, and a lower end of the lower housing 13 is supported on a circumferential edge of the opening. Moreover, the inlet portion 14 projects downward from the table 51 through the opening. The table 51 is provided with a fixing tool 18 for fixing the housing 10.

Each of the frame 52 and the leg 53 includes a metal pipe. The frame 52 is fixed to the table 51 with a screw or the like. The leg 53 is jointed to the frame 52 by welding or the like. The caster 54 is attached to a lower end of the leg 53. The caster 54 enables the support base 50 with the housing 10 mounted thereon to move. The caster 54 can also be omitted.

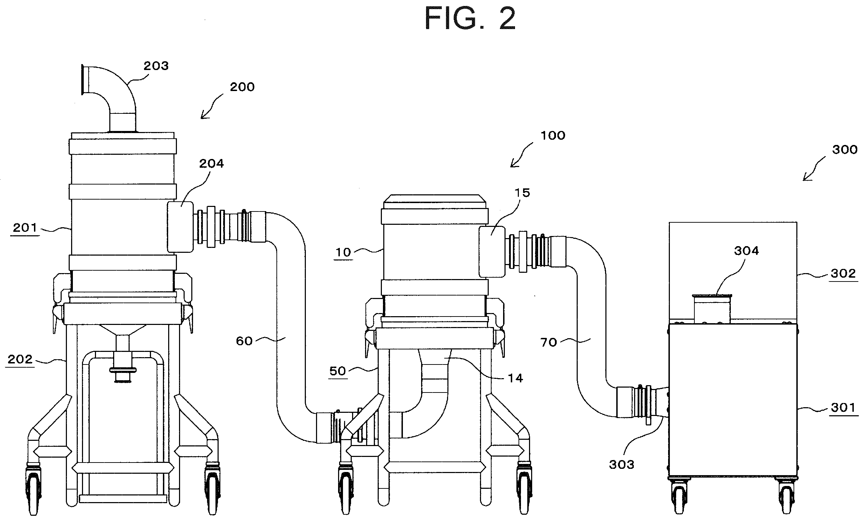

Fig. 2 illustrates a usage example of the filter apparatus 100 described above. The filter apparatus 100 is installed between a dust collection apparatus 200 and an air blowing apparatus 300. The dust collection apparatus 200 and the filter apparatus 100 are connected through a duct 60. The air blowing apparatus 300 and the filter apparatus 100 are connected through a duct 70. These elements constitute an air purification system.

The dust collection apparatus 200 includes a housing 201 in which a filter for dust collection (not illustrated) is housed and a support base 202 on which the housing 201 is mounted. A suction portion 203 is disposed in an upper part of the housing 201 and sucks an air current containing dust (dusty air current). A suction duct (not illustrated) is connected to the suction portion 203. A discharge portion 204 is disposed in a side part of the housing 201 and discharges the air current from which dust has been removed by the filter. One end of the duct 60 is connected to the discharge portion 204. The other end of the duct 60 is connected to the inlet portion 14 of the filter apparatus 100.

The air blowing apparatus 300 includes an air blowing unit 301 and a control unit 302. A fan (not illustrated), a motor that rotates the fan, and the like are housed in the air blowing unit 301. A control device that controls the motor, an electronic circuit, and the like are housed in the control unit 302. An inlet portion 303 is disposed in a side part of the air blowing unit 301 and introduces a clean air current filtered by the filter apparatus 100. One end of the duct 70 is connected to the inlet portion 303. The other end of the duct 70 is connected to the discharge portion 15 of the filter apparatus 100. A discharge portion 304 is disposed in an upper part of the air blowing unit 301 and discharges the clean air current.

The air purification system of Fig. 2 is installed in, for example, a work site of a pharmaceutical facility where a highly active pharmaceutical substance is handled. Air containing dust of the highly active pharmaceutical substance generated during operation passes through the suction duct and is taken to the inside of the dust collection apparatus 200 through the suction portion 203, and the dust is removed from the air by the filter. The air from which the most part of the dust has been removed is discharged through the discharge portion 204, passes through the duct 60, and is introduced to the inside of the housing 10 of the filter apparatus 100 through the inlet portion 14. Then, clean air filtered by the filter inside the housing 10 is discharged through the discharge portion 15, passes through the duct 70, and is introduced to the inside of the air blowing unit 301 of the air blowing apparatus 300 through the inlet portion 303. The introduced clean air is discharged through the discharge portion 304 by rotation of the fan.

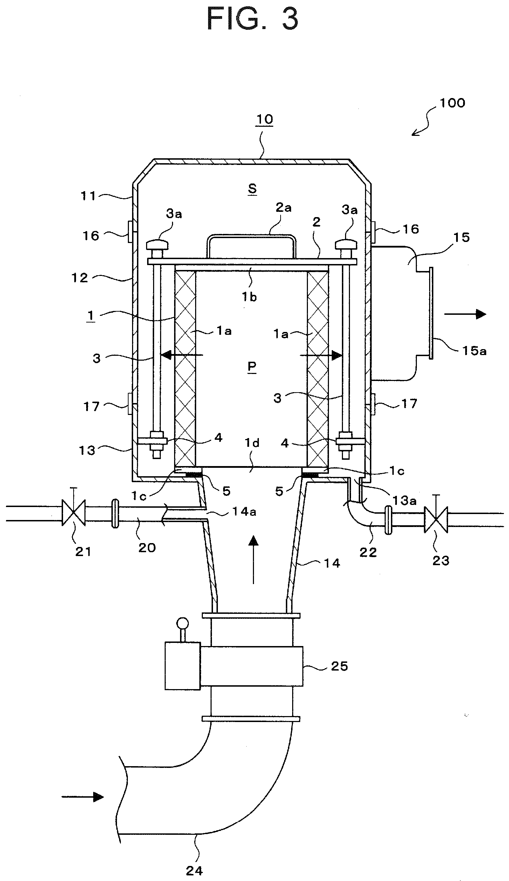

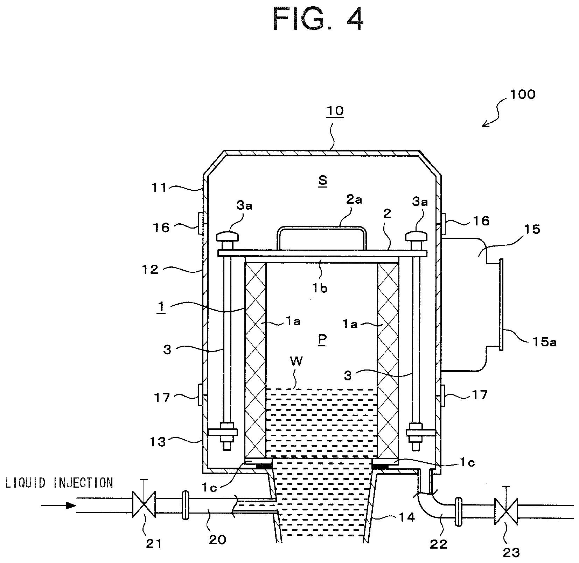

Fig. 3 illustrates the structure of a principal part of the filter apparatus 100. Fig. 3 illustrates the structure of each part in Fig. 1 in a simplified manner and does not illustrate the support base 50 of Fig. 1 (the same applies to Fig. 4 and thereafter).

In Fig. 3, a filter 1 is housed inside the housing 10 of the filter apparatus 100. In the present example, the filter 1 is the HEPA filter described above. The filter 1 includes a filter body 1a having a hollow cylindrical shape, an upper flange 1b which is disposed on an upper end of the filter body 1a, and a lower flange 1c which is disposed on a lower end of the filter body 1a. The upper flange 1b is formed in a discoid shape and closes an upper opening of the filter body 1a. The lower flange 1c is formed in a ring shape and includes an opening 1d which is disposed in a central part thereof and communicates with inside of the filter body 1a. A seal member 5 having elasticity is disposed between the lower flange 1c and the bottom of the lower housing 13. A space inside the filter 1 is a primary-side space P where an air current to be filtered flows, and a space outside the filter 1 is a secondary-side space S where the air current filtered by the filter body 1a flows.

The filter 1 is fixed to the housing 10 with a press plate 2 and a bolt 3. Specifically, the press plate 2 having a discoid shape is placed on the upper flange 1b of the filter 1, and a tip of the bolt 3 which penetrates the press plate 2 is screwed with an attachment portion 4 which is disposed on an inner wall of the lower housing 13. Then, the filter 1 is pressed between the press plate 2 and the bottom of the lower housing 13 by turning the bolt 3. At this time, the seal member 5 is elastically deformed by a fastening force of the bolt 3, which seals a gap between a passage leading to the primary-side space P from the inlet portion 14 and the secondary-side space S. The press plate 2 is provided with a grip portion 2a which is useful for attachment and detachment of the press plate 2. The bolt 3 is provided with a knob 3a which is useful for an operation.

A connection pipe 24 and a valve 25 are connected to the inlet portion 14. One end of the connection pipe 24 is connected to the valve 25, and the other end of the connection pipe 24 is connected to the duct 60 illustrated in Fig. 2. The valve 25 is disposed between the connection pipe 24 and the inlet portion 14 and closes or opens the passage of the inlet portion 14. The inlet portion 14 is an example of a "first drain pipe" in the present invention, and the valve 25 is an example of a "second valve" in the present invention. Furthermore, the inlet portion 14 and the valve 25 are an example of the "draining means" in the present invention. Note that a location where the valve 25 is disposed is not limited to the example of Fig. 3 and may be, for example, near a connection part between the connection pipe 24 and the duct 60.

A water injection pipe 20 is further connected to the inlet portion 14. The water injection pipe 20 is connected to a water injection port 14a which is formed on the inlet portion 14 and communicates with the passage of the inlet portion 14. Moreover, a drain pipe 22 is connected to the lower housing 13. The drain pipe 22 is connected to a drain port 13a which is formed on the lower housing 13 and communicates with the inside of the housing 10 (the secondary-side space S). The water injection pipe 20 is provided with a valve 21, and the drain pipe 22 is provided with a valve 23. The valve 21 closes or opens a passage of the water injection pipe 20, and the valve 23 closes or opens a passage of the drain pipe 22. The water injection pipe 20 and the valve 21 are an example of the "injection means" in the present invention. The valve 21 is an example of a "first valve" in the present invention. The drain pipe 22 and the valve 23 are an example of the "draining means" in the present invention. The drain pipe 22 is an example of a "second drain pipe" in the present invention, and the valve 23 is an example of a "third valve" in the present invention.

An arrow in Fig. 3 indicates the flow of an air current during normal operation of the filter apparatus 100. During the normal operation, the valve 25 keeps the passage of the inlet portion 14 open. Thus, the air current from which dust has been removed by the dust collection apparatus 200 (Fig. 2) passes through the duct 60, the connection pipe 24, the valve 25, and the inlet portion 14, and flows into the primary-side space P of the filter 1. The air current that has flowed into the primary-side space P passes through the filter body 1a and flows out to the secondary-side space S. In the course of this process, dust remaining in the air current is collected by the filter body 1a. The collected dust adheres to an inner surface of the filter body 1a. Thus, the air current that has flowed out to the secondary-side space S is a clean air current containing no dust. The clean air current is discharged through the discharge port 15a of the discharge portion 15 and, as described above, fed to the air blowing apparatus 300 through the duct 70 (Fig. 2).

Next, a procedure of replacing the filter 1 (Wet Open Change) in the above filter apparatus 100 will be described with reference to Figs. 4 to 11.

In replacing the filter 1, first, operation of the filter apparatus 100 is stopped. Specifically, the valve 25 connected to the inlet portion 14 is closed, and a valve (not illustrated) connected to the discharge portion 15 is also closed. In this state, as illustrated in Fig. 4, the valve 21 is opened to inject a liquid W through the water injection pipe 20. The liquid W to be injected may be water or a liquid other than water. The injected liquid W is introduced into the inlet portion 14 and the inside of the filter 1 (the primary-side space P), and a liquid level of the liquid W rises as the liquid W is injected.

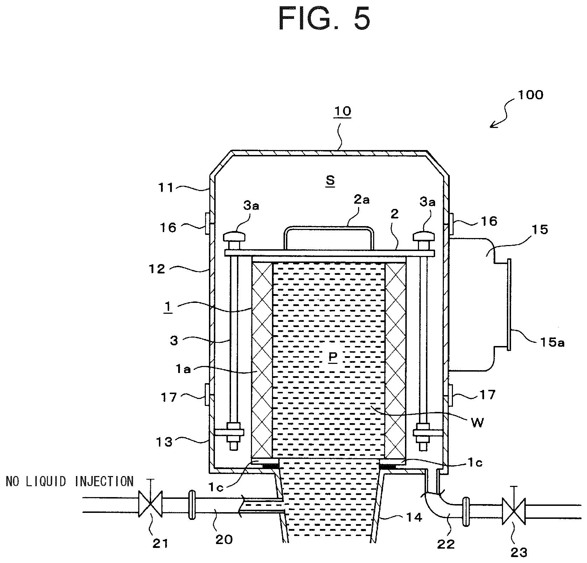

When the amount of injected liquid W reaches a certain amount, as illustrated in Fig. 5, the primary-side space P, which is an internal space of the filter 1, is filled with the liquid W. At this time, the entire area of the inner surface (that is, the dust-adhering surface) of the filter body 1a is immersed in the liquid W (a submerged state).

As illustrated in Fig. 5, when it is confirmed that the primary-side space P of the filter 1 is filled with the liquid W, the valve 21 is closed to stop the injection of the liquid W through the water injection pipe 20. As a method for confirming filling of the liquid W, for example, a rotary member (e.g., an impeller or a propeller) that rotates only while the liquid W is flowing and can be visually checked is disposed midway of the water injection pipe 20. When the inside of the filter 1 is filled with the liquid W, the rotation of the rotary member is stopped. Thus, it is possible to determine that the inside of the filter 1 has been filled with the liquid W. Alternatively, a liquid in an amount corresponding to the volume of the internal space of the filter 1 (the primary-side space P) may be stored in a tank, and all of the liquid stored in the tank may be injected through the water injection pipe 20. In this case, it can be determined that the inside of the filter 1 has been filled with the liquid at the point in time when the tank becomes empty. As another method, seepage of the liquid W from the surface of the filter 1 may be confirmed by visual check to determine that the inside of the filter 1 has been filled with the liquid W. The HEPA filter has moderate water repellency, and seepage of the liquid W thus does not occur until the inside of the filter is filled to capacity with the liquid W. However, when a liquid pressure is applied to the HEPA filter after the inside of the filter is filled to capacity with the liquid W, the liquid W penetrates and seeps through the filter material.

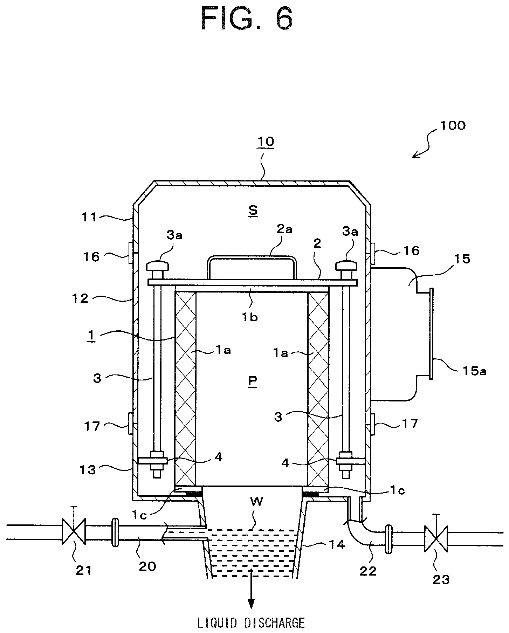

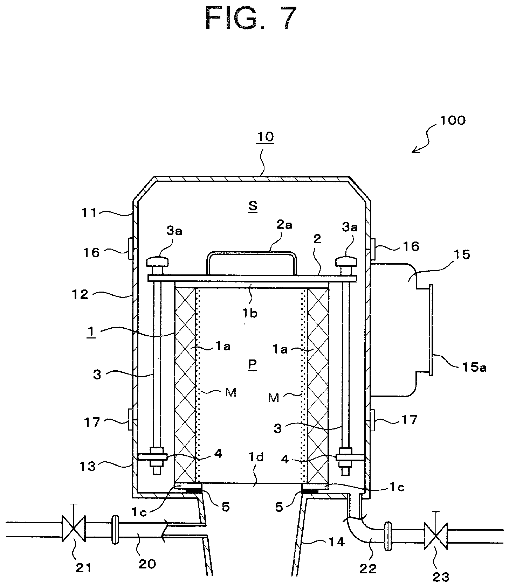

After the injection of the liquid W is stopped, the valve 25 of Fig. 3 is opened to discharge the liquid W inside the housing 10 through the inlet portion 14 as illustrated in Fig. 6. Alternatively, the liquid W may be discharged using the water injection pipe 20 by changing the connection position of the water injection pipe 20 to the bottom position of the inlet portion 14. In this case, the water injection pipe 20 serves as both the injection means and the draining means. After the liquid W is discharged, the inner surface of the filter body 1a to which dust adheres is in a wet state M as illustrated in Fig. 7. Since dust, though in a very small amount, is mixed in the liquid W flowing out though the inlet portion 14, it is desired to collect the liquid W to a tank or the like while keeping the liquid W in an enclosed state through another drain pipe connected to the inlet portion 14.

Moreover, after the injection of the liquid W is stopped, the valve 23 of Fig. 3 is also opened to discharge, through the drain pipe 22, the liquid W (not illustrated) that has leaked out of the filter 1 and accumulated on the bottom of the lower housing 13. Also in this case, it is desired to collect the liquid W to a tank or the like while keeping the liquid W in an enclosed state.

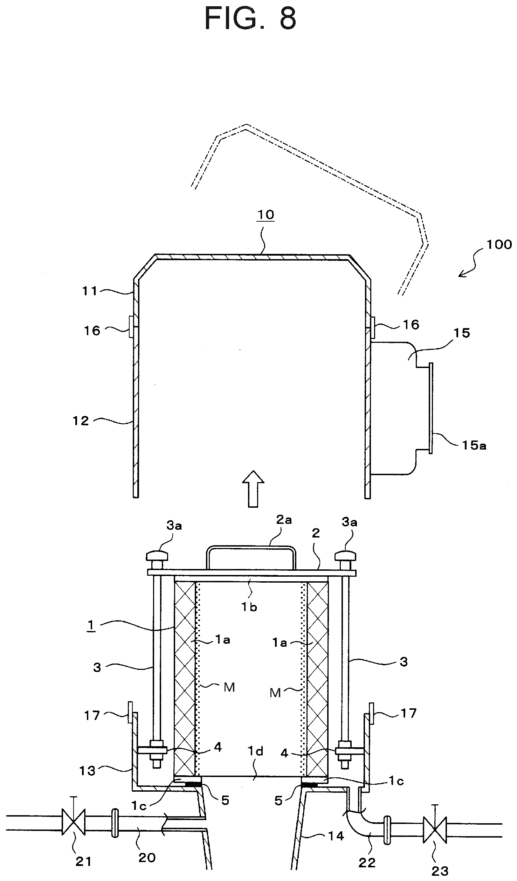

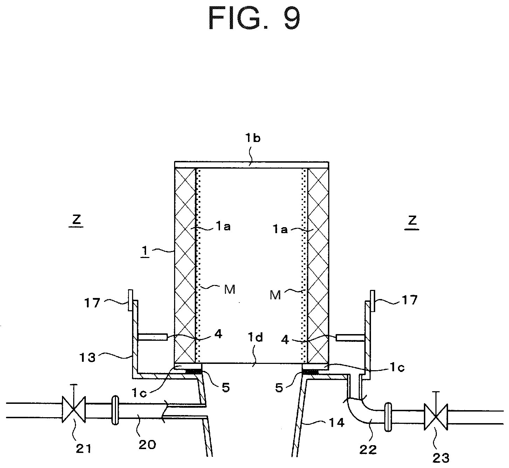

Next, as illustrated in Fig. 8, the upper housing 11 and the intermediate housing 12, which constitute a part of the housing 10, are detached from the lower housing 13. At this time, the coupling between the intermediate housing 12 and the lower housing 13 with the coupling member 17 is released, while the upper housing 11 and the intermediate housing 12 are kept coupled to each other with the coupling member 16. After the housings 11, 12 are detached, the bolt 3 is loosened, and the press plate 2 and the bolt 3 are detached, thereby releasing the fixation of the filter 1 with respect to the lower housing 13. As illustrated in Fig. 9, the filter 1 with the inner surface wet is exposed to an open space Z.

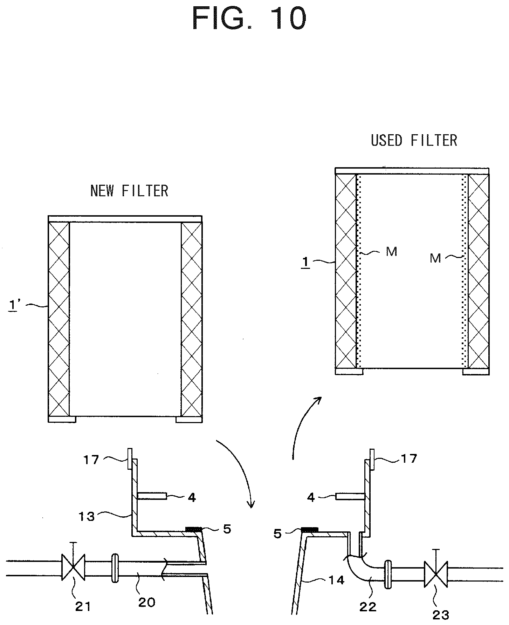

In this state, as illustrated in Fig. 10, the old filter is replaced with a new filter. Specifically, the used filter 1 is taken out of the lower housing 13, and a new filter 1' is set to the lower housing 13. When the used filter 1 is taken out, there is no possibility that dust flies off because the inner surface of the filter 1 to which the dust adheres is wet.

Then, in a procedure reverse to that of Fig. 8, the new filter 1' is fixed to the lower housing 13 with the seal member 5 interposed therebetween using the press plate 2 and the bolt 3, and the upper housing 11 and the intermediate housing 12 that have been detached are attached to the lower housing 13, thereby finishing the filter replacement operation.

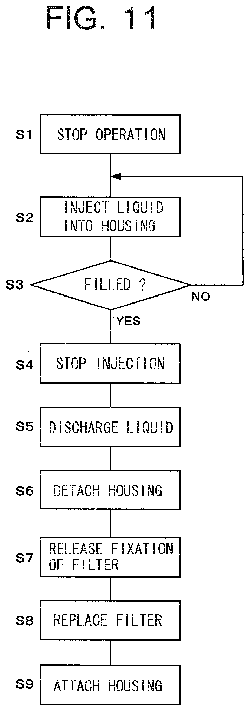

Fig. 11 is a flowchart of the filter replacement operation procedure described above. In step S1, the operation of the filter apparatus 100 is stopped. In step S2, the valve 21 is opened to inject the liquid W to the inside of the housing 10 through the water injection pipe 20. In step S3, it is checked whether the primary-side space P of the filter 1 is filled with the liquid W. When the filling of the liquid W is confirmed, the valve 21 is closed to stop the injection of the liquid W in step S4. In step S5, the valve 25 and the valve 23 are opened to discharge the liquid W inside the housing 10. In step S6, a part of the housing 10 (the upper housing 11 and the intermediate housing 12) is detached. In step S7, the press plate 2 and the bolt 3 are detached to release the fixation of the filter 1. In step S8, the used filter 1 is taken out, and the new filter 1' is set. In step S9, the detached housings 11, 12 are attached in an original state, and the operation is finished.

Steps S1 to S4 of Fig. 11 are steps of injecting the liquid W into the housing 10 to immerse the entire area of the inner surface (the dust-adhering surface) of the filter 1 in the liquid W in the state where the operation of the filter apparatus 100 is stopped. Step S5 is a step of discharging the liquid W injected into the housing 10. Step S6 is a step of detaching a part of the housing 10 to expose the wet filter 1 to the open space Z after discharging the liquid W. Steps S7 to S9 are steps of replacing the filter 1 exposed to the open space Z with the new filter 1'.

According to the Wet Open Change procedure described above, a Wet-Down process is performed by injecting the liquid W into the housing 10, in the state where the operation of the filter apparatus 100 is stopped, through the water injection pipe 20 to immerse the entire area of the inner surface of the filter 1 in the liquid W so as to bring the inner surface of the filter 1 into a submerged state, and then discharging the liquid W. Thus, it is possible to uniformly wet the entire area of the dust-adhering surface of the filter 1 and prevent the re-flying of dust adhering to the used filter 1 during filter replacement.

Moreover, a part of the housing 10 is detached to expose the wet filter 1 to the open space Z, and the filter 1 is replaced in this state. This makes it extremely easy to perform the replacement operation in a wide space. In addition, even when the filter 1 is exposed in this manner, there is no risk of exposure because the dust-adhering surface (inner surface) of the filter 1 is uniformly wet. Furthermore, the outer surface, which is not wet, of the filter 1 is not a dust-adhering surface. Even if a very small amount of dust adheres to the outer surface of the filter 1, there is no risk of exposure because the high-performance filter reduces the concentration of an adhering substance to an allowable limit or less. Thus, it is possible to perform the operation of replacing the filter 1 without using Bag-in/Bag-out in combination. Furthermore, it is also possible to easily check, in the open space Z, whether the filter 1' has been normally set so that a seal surface of the new filter 1' and a seal surface of the seal member 5 are joined. Thus, the reliability of sealing is improved.

Furthermore, unlike a manual operation through a bag like the conventional Bag-in/Bag-out method, the filter 1 can be replaced by a direct manual operation. Thus, the operation is easy, and it is possible to avoid the risk of exposure caused by dust of, for example, a highly active pharmaceutical substance leaking through a gap in the bag. Furthermore, since no plastic bag is used in the replacement operation, there are advantages in that no running cost is required and no bag storage space is required.

Furthermore, in the filter apparatus 100 having the structure as illustrated in Fig. 3, the liquid W should be injected only by an amount that brings the dust-adhering surface of the filter 1 into a submerged state. Thus, the amount of liquid W required for Wet-Down is reduced. Furthermore, Wet-Down is performed by bringing the filter 1 into a submerged state, which eliminates the necessity of a space for spraying water and also eliminates the necessity of a component such as a spray nozzle and a drain-out mechanism for discharging a large amount of water accumulated inside. The combination of the above advantages enables minimization of the difference between the internal volume of the housing 10 and a volume occupied by the filter 1 (≈ the volume of the secondary-side space S). As a result, it is possible to downsize the filter apparatus 100 to an absolute minimum.

Furthermore, in Fig. 3, the water injection pipe 20 communicates with the internal space (the primary-side space P) of the filter 1, and the gap between the filter 1 and the housing 10 is sealed with the seal member 5. Thus, it is possible to selectively bring only the inner surface (the dust-adhering surface) of the filter 1 into the wet state M as illustrated in Fig. 7 by injecting the liquid W through the water injection pipe 20.

Next, other embodiments of the present invention will be described.

### <Second Embodiment>

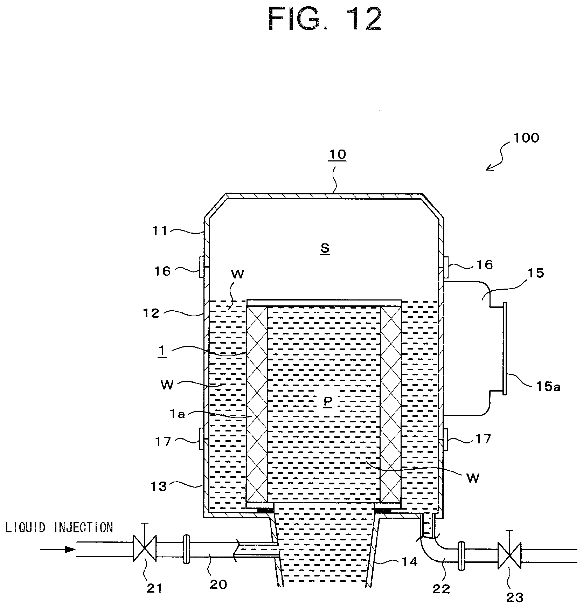

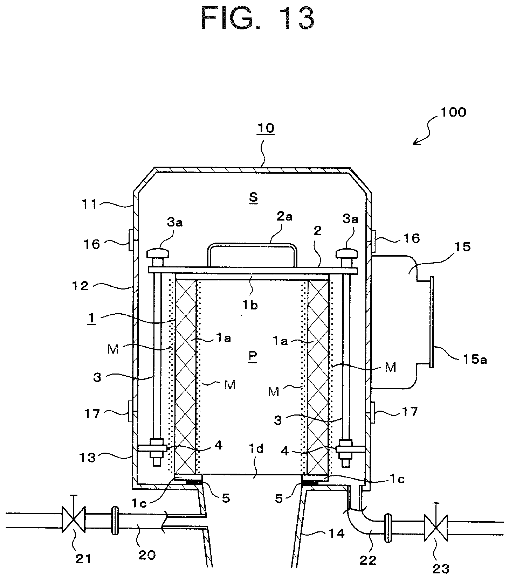

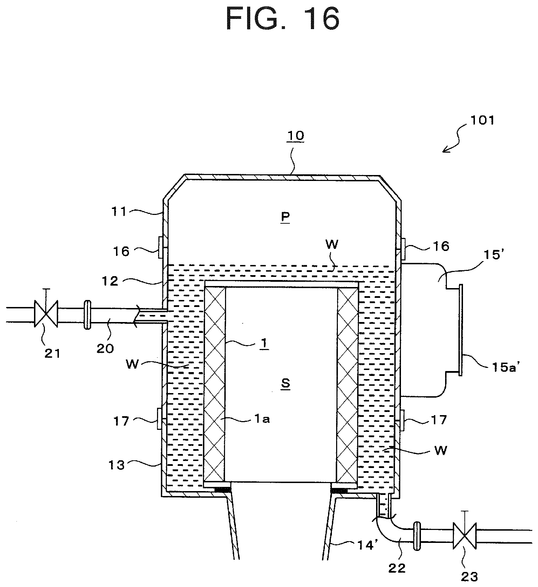

In Fig. 5, the injection of the liquid W is stopped at the point in time when the primary-side space P of the filter 1 is filled with the liquid W. However, when the filter body 1a has permeability, as illustrated in Fig. 12, not only the primary-side space P, but also the secondary-side space S may be filled with the liquid W by allowing the liquid W to transmit the filter body 1a. In this case, the outer surface of the filter 1 is immersed in the liquid W filled in a space between the outer surface of the filter 1 and the inner surface of the housing 10. Note that, in Fig. 12, the press plate 2 and the bolt 3 are not illustrated (the same applied to Fig. 16 described below). When the primary-side space P and the secondary-side space S are both filled with the liquid W in this manner, the inner surface and the outer surface of the filter body 1a both become the wet state M as illustrated in Fig. 13. Thus, the flying of dust can be more reliably reduced.

### <Third Embodiment>

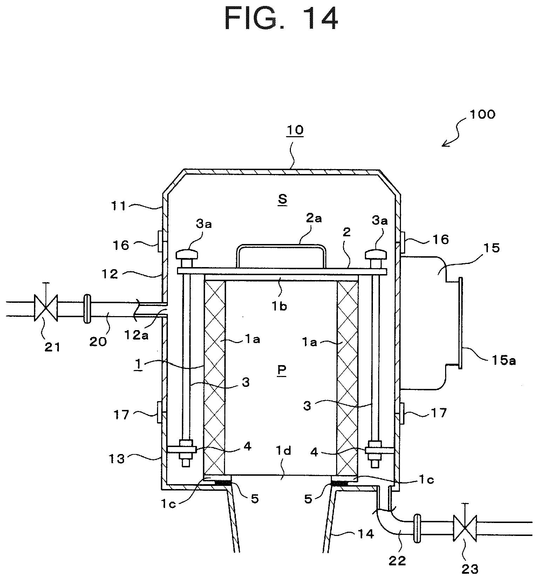

In Fig. 3, the inlet portion 14 is provided with the water injection port 14a, and the water injection pipe 20 is connected to the inlet portion 14. However, as illustrated in Fig. 14, the intermediate housing 12 may be provided with a water injection port 12a, and the water injection pipe 20 may be connected to the intermediate housing 12. Moreover, the upper housing 11 or the lower housing 13 may be provided with a water injection port. Furthermore, the water injection pipe 20 of Fig. 3 and the water injection pipe 20 of Fig. 14 may both be provided.

### <Fourth Embodiment>

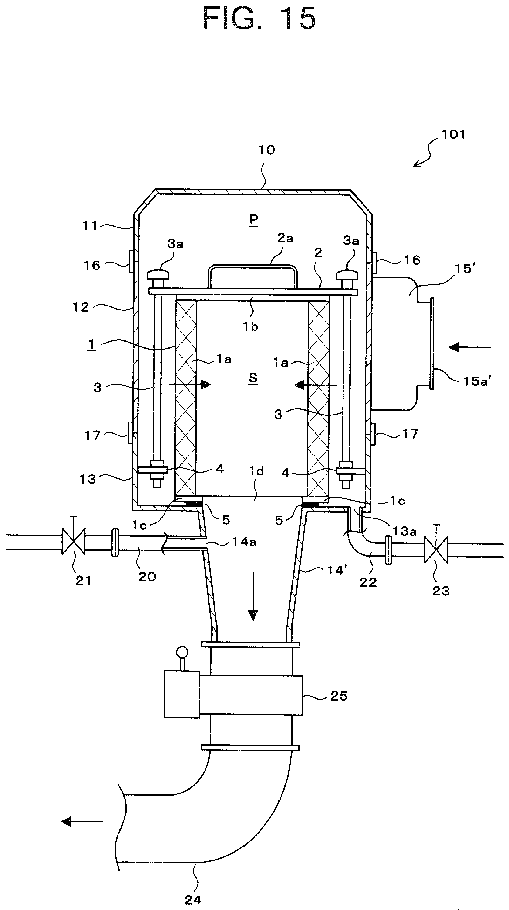

Fig. 3 illustrates the filter apparatus 100 having a structure in which the air current introduced into the housing 10 flows from the inside to the outside of the filter 1. However, as illustrated in Fig. 15, the present invention is also applicable to a filter apparatus 101 having a structure in which an air current flows from the outside to the inside of the filter 1. In this case, the outer surface of the filter 1 corresponds to the dust-adhering surface. In Fig. 15, the discharge portion 15 and the discharge port 15a of Fig. 3 are replaced with an inlet portion 15' and an inlet port 15a', respectively, and the inlet portion 14 of Fig. 3 is replaced with a discharge portion 14'. The discharge portion 14' is an example of the "draining means" and the "first drain pipe" in the present invention. Furthermore, in Fig. 15, the primary-side space P of Fig. 3 is replaced with a secondary-side space S, and the secondary-side space S of Fig. 3 is replaced with a primary-side space P. The other configurations are similar to those of Fig. 3.

### <Fifth Embodiment>

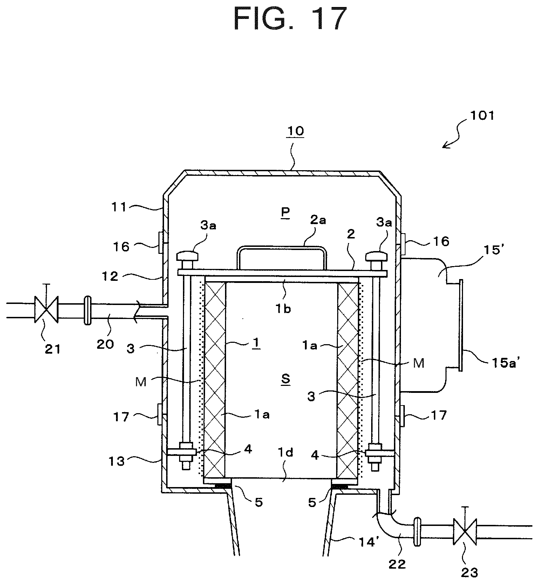

In the case of the filter apparatus 101 as illustrated in Fig. 15 in which the air current flows from the outside to the inside of the filter 1, the structure as illustrated in Fig. 14 in which the water injection pipe 20 is connected to the housing 10 may be employed so that the outer surface (the dust-adhering surface) of the filter 1 is immersed in the liquid W injected through the water injection pipe 20 as illustrated in Fig. 16. According to this structure, as illustrated in Fig. 17, the outer surface of the filter 1 becomes the wet state M, which reduces the flying of dust during filter replacement. Although in Fig. 16, the space between the outer surface of the filter 1 and the inner surface of the housing 10 is filled with the liquid W, the inside of the filter 1 (the secondary-side space S) may also be filled with the liquid W. In this case, as with Fig. 13, the outer surface and the inner surface of the filter 1 both become the wet state.

### <Sixth Embodiment>

In Fig. 12 or Fig. 16, the liquid W may be filled up to a ceiling of the housing 10. In this case, a syringe filter (common name: a top-shaped filter) 11b is attached to an ejection port 11a which is disposed on the upper face of the upper housing 11 as illustrated in Fig. 1 to enable confirmation of the filling of the liquid W by visual check. When the inside of the housing 10 is filled to capacity with the liquid W, the liquid W leaks out of the syringe filter 11b. Thus, it is possible to confirm the filling to capacity. Alternatively, the upper housing 11 may be detached from the intermediate housing 12, and the liquid level inside the housing 10 may be directly visually checked to confirm the filling to capacity.

### <Seventh Embodiment>

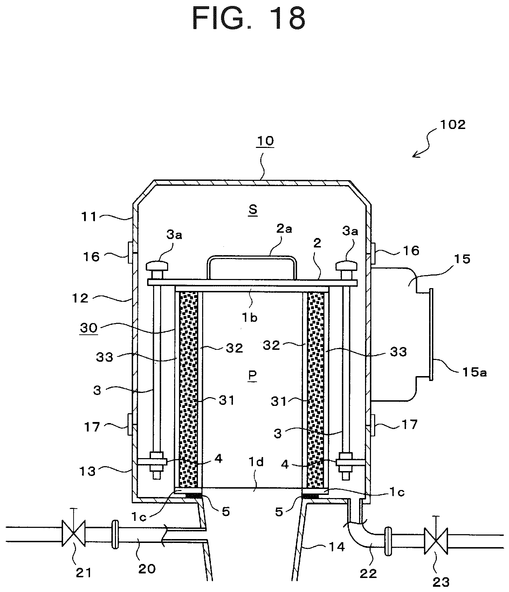

In the above first embodiment, the HEPA filter is used as the filter 1. However, the ULPA filter described above may be used instead of the HEPA filter. Moreover, the filter used in the present invention is not limited to the high-performance filter, such as the HEPA filter or the ULPA filter, and may be a normal bag filter. Furthermore, the filter used in the present invention is not limited thereto and may be a filter 30, as illustrated in Fig. 18, having a structure in which a large number of granular filter media 31 are packed.

In Fig. 18, the filter 30 includes an inner tube 32 having a cylindrical shape and an outer tube 33 having a cylindrical shape, and a space between the inner tube 32 and the outer tube 33 is packed with the granular filter media 31. Each of the inner tube 32 and the outer tube 33 is made of a metal or resin net which allows a fluid to pass therethrough. The granular filter media 31 are made of, for example, glass or resin having a spherical shape, a columnar shape, a prism shape, a flat-plate shape, or a random shape. The granular filter media 31 may be made of a material having a gas adsorption property. When an air current introduced into the housing 10 passes through the filter 30, dust contained in the air current is collected by the granular filter media 31 so that the air current is filtered. A filter apparatus 102 of Fig. 18 can also employ each embodiment in the filter apparatuses 100, 101 described above.

### <Eighth Embodiment>

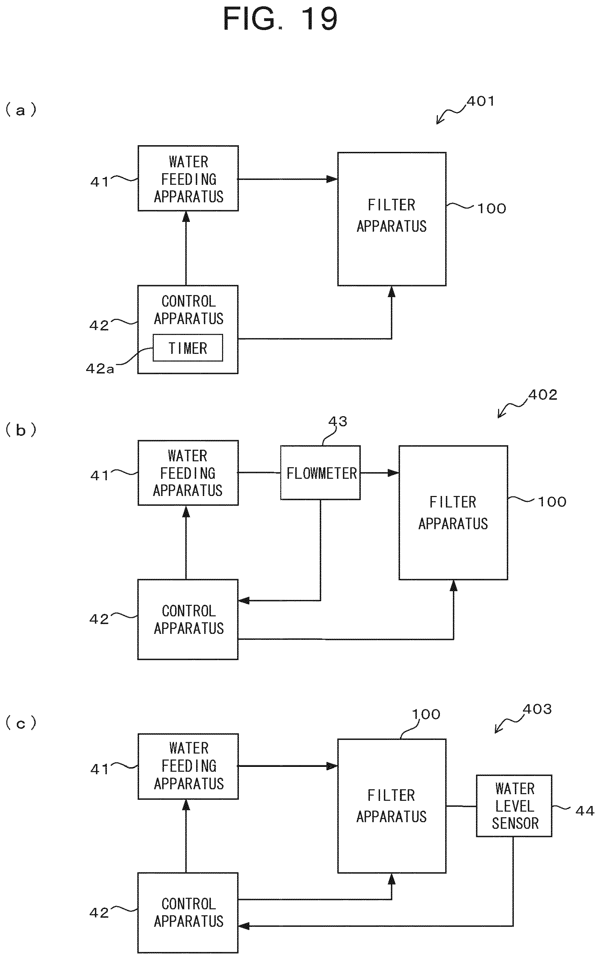

In the above first embodiment, when the Wet-Down process for wetting the filter 1 is performed, an operator confirms that the liquid W has been filled, manually closes the valve 21 to stop the injection of the liquid W, and manually opens the valves 23, 25 to discharge the liquid W. However, these operations can also be automated. Fig. 19 illustrates an example of an automatic Wet-Down system in this case.

In Fig. 19(a), the filter apparatus 100, a water feeding apparatus 41, and a control apparatus 42 are provided, and these apparatuses constitute an automatic Wet-Down system 401. The filter apparatus 100 may be replaced with the filter apparatus 101 of Fig. 15 or the filter apparatus 102 of Fig. 18. The water feeding apparatus 41 feeds the liquid W (here, water) into the housing 10 of the filter apparatus 100 through the water injection pipe 20. The control apparatus 42 controls a water feeding operation of the water feeding apparatus 41 and a draining operation of the filter apparatus 100. The water feeding apparatus 41 is an example of a "liquid feeding apparatus" in the present invention.

The control apparatus 42 incorporates therein a timer 42a and detects that a predetermined amount of liquid W has been fed into the housing 10 on the basis of a time measured by the timer 42a. Specifically, the control apparatus 42 gives a water feeding command to the water feeding apparatus 41 and an actuator (not illustrated) that opens and closes the valve 21 of the filter apparatus 100 and starts timing using the timer 42a at the point in time when the valve 21 is opened to start water feeding. When the measured time reaches a predetermined time, the control apparatus 42 determines that the certain amount of liquid W has been fed into the housing 10, and closes the valve 21 and gives a draining command to actuators (not illustrated) that open and close the valves 23, 25. In the filter apparatus 100, the valves 23, 25 are opened to automatically discharge the liquid W inside the housing 10 in accordance with the draining command. The draining may be performed after an elapse of a time required to sufficiently wet the filter 1 from the point in time when the valve 21 is closed to stop water feeding.

In an automatic Wet-Down system 402 of Fig. 19(b), instead of the timer 42a of Fig. 19(a), a flowmeter 43 is disposed midway of a passage leading to the filter apparatus 100 from the water feeding apparatus 41. The control apparatus 42 monitors a flow rate of the liquid W measured by the flowmeter 43 and determines that a predetermined amount of liquid W has been fed into the housing 10 when the flow rate reaches a predetermined rate. Then, the control apparatus 42 performs control similar to that in the case of Fig. 19(a).

In an automatic Wet-Down system 403 of Fig. 19(c), instead of the timer 42a of Fig. 19(a), a water level sensor 44 is attached to the filter apparatus 100. The control apparatus 42 monitors a water level of the liquid W detected by the water level sensor 44 and determines that a predetermined amount of liquid W has been fed into the housing 10 when the water level reaches a predetermined value. Then, the control apparatus 42 performs control similar to that in the case of Fig. 19(a).

According to each of the embodiments of Fig. 19(a) to Fig. 19 (c), the Wet-Down process in filter replacement in the filter apparatus 100 is automated. Thus, it is possible to bring the filter 1 into an optimum wet state and also shorten the time of the operation of replacing the filter 1.

### <Ninth Embodiment>

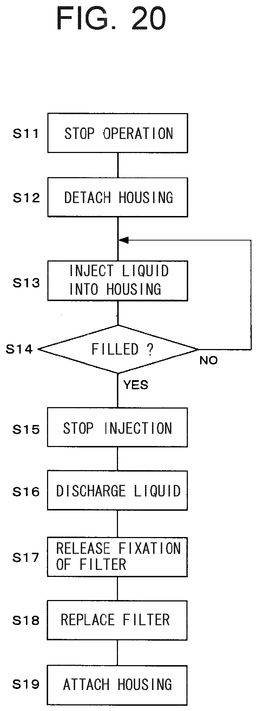

In the above first embodiment, the filter replacement is performed by exposing the filter 1 to the open space Z after injecting the liquid W to bring the filter 1 into the wet state (WOC: Wet Open Change). However, the liquid W may be injected to bring the filter 1 into the wet state after exposing the filter 1 to the open space Z (OWC: Open Wet Change). The conditions for this case are that the inner surface of the filter 1 is the dust-adhering surface, and the outer surface thereof is a clean surface. High-performance filters, such as the HEPA filter and the ULPA filter, satisfy the conditions. Fig. 20 illustrates a procedure of the Open Wet Change.

In Fig. 20, steps S11 and S12 are steps of detaching a part of the housing 10 to expose the filter 1 to the open space Z in a state where the operation of the filter apparatus 100 is stopped. Steps S13 to S15 are steps of injecting the liquid W into the filter 1 to immerse the entire area of the inner surface (dust-adhering surface) of the filter 1 in the liquid W. Step S16 is a step of discharging the liquid W injected into the filter 1. Steps S17 to S19 are steps of replacing the filter 1 wet with the liquid W with the new filter 1'.

The Open Wet Change has advantages in that the amount of liquid used is minimized because the liquid W is injected only to the inside of the filter 1, and it is easy to confirm by visual check that the inside of the filter 1 is filled to capacity with the liquid because the liquid injection is performed in the open space Z.

### <Other Embodiments>

The present invention can employ various embodiments as described below in addition to the embodiments described above.

Although the above first embodiment describes an example in which the filter 1 is formed in a hollow cylindrical shape, the shape of the filter 1 is not limited thereto. For example, the filter 1 may be a hollow rectangular tubular filter or a solid rectangular filter.

Although the above first embodiment describes an example in which the filter apparatus 100 is used in combination with the dust collection apparatus 200 and the air blowing apparatus 300 as illustrated in Fig. 2, the filter apparatus 100 can also be used standalone (the same applies to the filter apparatuses 101, 102).

Although, in the above first embodiment, the housing 10 is divided into three parts: the upper housing 11; the intermediate housing 12; and the lower housing 13, the housing 10 may be divided into, for example, two parts or four parts.

Although the above first embodiment describes the catch clip as an example of the coupling members 16, 17 of the housings 11 to 13, a ferrule joint can also be used instead of the catch clip.

Although the above first embodiment describes an example in which the filter apparatus 100 is provided with the support base 50, the support base 50 may be omitted (the same applies to the filter apparatuses 101, 102).

### INDUSTRIAL APPLICABILITY

The present invention can be used in places where measures against exposure are required, such as pharmaceutical facilities where highly active pharmaceutical substances are handled, agricultural chemical facilities where highly active pharmaceutical substances are handled, and facilities where other chemical substances are handled.

### REFERENCE SIGNS LIST

- 1: filter
- 1': new filter
- 10: housing
- 11: upper housing
- 12: intermediate housing
- 13: lower housing
- 14: inlet portion (draining means, first drain pipe)
- 14': discharge portion (draining means, first drain pipe)
- 15: discharge portion
- 15': inlet portion
- 20: water injection pipe (injection means)
- 21: valve (injection means, first valve)
- 22: drain pipe (draining means, second drain pipe)
- 23: valve (draining means, third valve)
- 25: valve (draining means, second valve)
- 41: water feeding apparatus (liquid feeding apparatus)
- 42: control apparatus
- 100, 101, 102: filter apparatus
- 401, 402, 403: automatic Wet-Down system
- P: primary-side space
- S: secondary-side space
- W: liquid
- Z: open space

## Claims

1. A filter replacement method in a filter apparatus (100, 101, 102),
the filter apparatus (100, 101, 102) including:
a housing (10);
a filter (1) housed in the housing (10);
an inlet portion (14, 15') configured to introduce a fluid containing dust into the housing (10); and
a discharge portion (14', 15) configured to discharge the fluid filtered by the filter (1),
the method comprising the steps of:
injecting a liquid (W) into the housing (10) to immerse an entire area of a dust-adhering surface of the filter (1) in the liquid (W) in a state where operation of the filter apparatus (100, 101, 102) is stopped;
discharging the liquid (W) injected into the housing (10);
detaching a part of the housing (10) to expose the filter (1) being wet to an open space (Z) after discharging the liquid (W); and
replacing the wet filter (1) exposed to the open space (Z) with a new filter (1), wherein the liquid (W) is injected into the housing (10) through the inlet portion (14, 15') or the discharge portion (14', 15) and discharged through the inlet portion (14, 15') or the discharge portion (14', 15).

2. The filter replacement method according to claim 1, wherein
the filter (1) is formed in a hollow tubular shape, and
the liquid (W) is injected into the housing (10) so as to immerse an entire area of an inner surface, an outer surface, or both the inner surface and the outer surface of the filter (1) in the liquid (W).

3. The filter replacement method according to claim 2, wherein an internal space of the filter (1) is filled with the liquid (W) injected into the housing (10) so as to immerse the entire area of the inner surface of the filter (1) in the liquid (W).

4. The filter replacement method according to claim 2, wherein a space between the outer surface of the filter (1) and an inner surface of the housing (10) is filled with the liquid (W) injected into the housing (10) so as to immerse the entire area of the outer surface of the filter (1) in the liquid (W).

5. The filter replacement method according to claim 2, wherein an internal space of the filter (1) and a space between the outer surface of the filter (1) and an inner surface of the housing (10) are filled with the liquid (W) injected into the housing (10) so as to immerse the entire area of both the inner surface and the outer surface of the filter (1) in the liquid (W).

6. The filter replacement method according to any one of claims 1 to 5, wherein a predetermined amount of liquid (W) is injected into the housing (10).

7. The filter replacement method according to claim 6, wherein the liquid (W) is automatically discharged when the predetermined amount of liquid (W) is injected into the housing (10).

8. A filter replacement method in a filter apparatus (100, 101, 102),
the filter apparatus (100, 101, 102) including:
a housing (10);
a filter (1) housed in the housing (10);
an inlet portion (14, 15') configured to introduce a fluid containing dust into the housing (10); and
a discharge portion (14', 15) configured to discharge the fluid filtered by the filter (1),
the method comprising the steps of:
detaching a part of the housing (10) to expose the filter (1) to an open space (Z) in a state where operation of the filter apparatus (100, 101, 102) is stopped;
injecting a liquid (W) into the filter (1) to immerse an entire area of an inner surface of the filter (1) in the liquid (W);
discharging the liquid (W) injected into the filter (1); and
replacing the filter (1) wet with the liquid (W) with a new filter (1),
wherein the liquid (W) is injected into the housing (10) through the inlet portion (14, 15') or the discharge portion (14', 15) and discharged through the inlet portion (14, 15') or the discharge portion (14', 15).

9. A filter apparatus (100, 101, 102) comprising:
a housing (10);
a filter (1) housed in the housing (10);
an inlet portion (14, 15') configured to introduce a fluid containing dust into the housing (10);
a discharge portion (14', 15) configured to discharge the fluid filtered by the filter (1);
injection means (20, 21) configured to inject a liquid (W) into the housing (10); and
draining means (14, 14', 22, 23, 25) configured to discharge the injected liquid (W), wherein
the housing (10) has a structure in which the housing (10) includes a detachable part, and the filter (1) is exposed to an open space (Z) when the detachable part is detached, and
the injection means (20, 21) injects the liquid (W) so as to immerse an entire area of a dust-adhering surface of the filter (1), **characterized in that**
the injection means (20, 21) injects the liquid (W) into the housing (10) through the inlet portion (14, 15') or the discharge portion (14', 15), and
the draining means (14, 14', 22, 23, 25) discharges the liquid (W) through the inlet portion (14, 15') or the discharge portion (14', 15).

10. The filter apparatus according to claim 9, wherein
the filter (1) is formed in a hollow tubular shape, and
the injection means (20, 21) injects the liquid (W) into the housing (10) so as to immerse an entire area of an inner surface, an outer surface, or both the inner surface and the outer surface of the filter (1) in the liquid (W).

11. The filter apparatus according to claim 9 or 10, wherein
the injection means (20, 21) includes:
a water injection pipe (20) communicating with the inlet portion (14, 15') or the discharge portion (14', 15); and
a first valve (21) configured to close or open a passage of the water injection pipe (20).

12. The filter apparatus according to any one of claims 9 to 11, wherein
the draining means (14, 14', 22, 23, 25) includes:
a first drain pipe (14, 14') including the inlet portion (14, 15') or the discharge portion (14', 15); and
a second valve (25) configured to close or open a passage of the first drain pipe (14, 14').

13. The filter apparatus according to claim 12, wherein
the draining means (14, 14', 22, 23, 25) further includes:
a second drain pipe (22) communicating with an inside of the housing (10); and
a third valve (23) configured to close or open a passage of the second drain pipe (22).

14. An automatic Wet-Down system comprising:
the filter apparatus (100, 101, 102) according to any one of claims 10 to 13;
a liquid feeding apparatus (41) configured to feed the liquid (W) into the housing (10) of the filter apparatus (100, 101, 102) through the injection means (20, 21); and
a control apparatus (42) configured to control a draining operation of the filter apparatus (100, 101, 102), wherein
the control apparatus (42) automatically discharges the liquid (W) inside the housing (10) through the draining means (14, 14', 22, 23, 25) when the control apparatus (42) detects that a predetermined amount of liquid (W) has been fed into the housing (10) from the liquid feeding apparatus (41).

## Patentansprüche

1. Filteraustauschverfahren in einer Filtervorrichtung (100, 101, 102),
die aufweist:
ein Gehäuse (10);
ein Filter (1), das in dem Gehäuse (10) untergebracht ist;
einen Einlassabschnitt (14, 15'), der dazu ausgebildet ist, ein Fluid, das Staub enthält, in das Gehäuse (10) einzubringen; und
einen Abführabschnitt (14', 15), der dazu ausgebildet ist, das Fluid, das durch das Filter (1) gefiltert wird, abzuführen,
mit den Schritten:
Einspritzen einer Flüssigkeit (W) in das Gehäuse (10) zum Tauchen eines gesamten Bereichs einer staubanhaftenden Oberfläche des Filters (1) in die Flüssigkeit (W) in einem Zustand, in dem ein Betrieb der Filtervorrichtung (100, 101, 102) gestoppt ist;
Abführen der Flüssigkeit (W), die in das Gehäuse (10) eingespritzt wird;
Lösen eines Teils des Gehäuses (10), so dass das Filter (1), das feucht ist, einem offenen Raum (Z) exponiert wird, nachdem die Flüssigkeit (W) abgeführt wird; und
Austauschen des feuchten Filters (1), das dem offenen Raum (Z) exponiert ist, durch ein neues Filter (1), bei dem die Flüssigkeit (W) in das Gehäuse (10) durch den Einlassabschnitt (14, 15') oder den Abführabschnitt (14', 15) eingespritzt und durch den Einlassabschnitt (14, 15') oder den Abführabschnitt (14', 15) abgeführt wird.

2. Filteraustauschverfahren nach Anspruch 1, bei dem
das Filter (1) in einer holen rohrförmigen Form ausgebildet ist, und
die Flüssigkeit (W) in das Gehäuse (10) so eingespritzt wird, dass ein gesamter Bereich einer inneren Oberfläche, einer äußeren Oberfläche oder sowohl der inneren Oberfläche als auch der äußeren Oberfläche des Filters (1) in die Flüssigkeit (W) getaucht wird.

3. Filteraustauschverfahren nach Anspruch 2, bei dem ein Innenraum des Filters (1) mit der Flüssigkeit (W), die in das Gehäuse (10) eingespritzt wird, gefüllt wird, so dass der gesamte Bereich der inneren Oberfläche des Filters (1) in die Flüssigkeit (W) getaucht wird.

4. Filteraustauschverfahren nach Anspruch 2, bei dem ein Raum zwischen der äußeren Oberfläche des Filters (1) und einer inneren Oberfläche des Gehäuses (10) mit der Flüssigkeit (W), die in das Gehäuse (10) eingespritzt wird, gefüllt wird, so dass der gesamte Bereich der äußeren Oberfläche des Filters (1) in die Flüssigkeit (W) getaucht wird.

5. Filteraustauschverfahren nach Anspruch 2, bei dem ein Innenraum des Filters (1) und ein Raum zwischen der äußeren Oberfläche des Filters (1) und einer inneren Oberfläche des Gehäuses (10) mit der Flüssigkeit (W), die in das Gehäuse (10) eingespritzt wird, gefüllt werden, so dass der gesamte Bereich sowohl der inneren Oberfläche als auch der äußeren Oberfläche des Filters (1) in die Flüssigkeit (W) getaucht wird.

6. Filteraustauschverfahren nach einem der Ansprüche 1 bis 5, bei dem eine vorbestimmte Menge an Flüssigkeit (W) in das Gehäuse (10) eingespritzt wird.

7. Filteraustauschverfahren nach Anspruch 6, bei dem die Flüssigkeit (W) automatisch abgeführt wird, wenn die vorbestimmte Menge an Flüssigkeit (W) in das Gehäuse (10) eingespritzt ist.

8. Filteraustauschverfahren in einer Filtervorrichtung (100, 101, 102),
die aufweist:
ein Gehäuse (10);
ein Filter (1), das in dem Gehäuse (10) untergebracht ist;
einen Einlassabschnitt (14, 15'), der dazu ausgebildet ist, ein Fluid, das Staub enthält, in das Gehäuse (10) einzubringen; und
einen Abführabschnitt (14', 15), der dazu ausgebildet ist, das Fluid, das durch das Filter (1) gefiltert wird, abzuführen,
mit den Schritten:
Lösen eines Teils des Gehäuses (10), so dass das Filter (1) einem offenen Raum (Z) exponiert wird, in einem Zustand, in dem ein Betrieb der Filtervorrichtung (100, 101, 102) gestoppt ist; Einspritzen einer Flüssigkeit (W) in das Filter (1) zum Tauchen eines gesamten Bereichs einer inneren Oberfläche des Filters (1) in die Flüssigkeit (W);
Abführen der Flüssigkeit (W), die in das Filter (1) eingespritzt wird; und
Austauschen des Filters (1), das von der Flüssigkeit (W) feucht ist, durch ein neues Filter (1), bei dem die Flüssigkeit (W) in das Gehäuse (10) durch den Einlassabschnitt (14, 15') oder den Abführabschnitt (14', 15) eingespritzt und durch den Einlassabschnitt (14, 15') oder den Abführabschnitt (14', 15) abgeführt wird.

9. Filtervorrichtung (100, 101, 102) mit:
einem Gehäuse (10);
einem Filter (1), das in dem Gehäuse (10) untergebracht ist;
einem Einlassabschnitt (14, 15'), der dazu ausgebildet ist, ein Fluid, das Staub enthält, in das Gehäuse (10) einzubringen;
einem Abführabschnitt (14', 15), der dazu ausgebildet ist, das Fluid, das durch das Filter (1) gefiltert wird, abzuführen;
einem Einspritzmittel (20, 21), das dazu ausgebildet ist, eine Flüssigkeit (W) in das Gehäuse (10) einzuspritzen; und
einem Ablassmittel (14, 14', 22, 23, 25), das dazu ausgebildet ist, die eingespritzte Flüssigkeit (W) abzuführen, bei der
das Gehäuse (10) eine Struktur aufweist, in der das Gehäuse (10) einen lösbaren Teil aufweist, und das Filter (1) einem offenen Raum (Z) exponiert wird, wenn der lösbare Teil gelöst wird, und
das Einspritzmittel (20, 21) die Flüssigkeit (W) einspritzt, so dass ein gesamter Bereich einer staubanhaftenden Oberfläche des Filters (1) eingetaucht wird, **dadurch gekennzeichnet, dass** das Einspritzmittel (20, 21) die Flüssigkeit (W) in das Gehäuse (10) durch den Einlassabschnitt (14, 15') oder den Abführabschnitt (14', 15) einspritzt, und
das Ablassmittel (14, 14', 22, 23, 25) die Flüssigkeit (W) durch den Einlassabschnitt (14, 15') oder den Abführabschnitt (14', 15) abführt.

10. Filtervorrichtung nach Anspruch 9, bei der
das Filter (1) in einer holen rohrförmigen Form ausgebildet ist, und
das Einspritzmittel (20, 21) die Flüssigkeit (W) in das Gehäuse (10) so einspritzt, dass ein gesamter Bereich einer inneren Oberfläche, einer äußeren Oberfläche oder sowohl der inneren Oberfläche als auch der äußeren Oberfläche des Filters (1) in die Flüssigkeit (W) getaucht wird.

11. Filtervorrichtung nach Anspruch 9 oder 10, bei der
das Einspritzmittel (20, 21) aufweist:
ein Wassereinspritzrohr (20), das mit dem Einlassabschnitt (14, 15') oder dem Abführabschnitt (14', 15) in Verbindung steht; und
ein erstes Ventil (21), das dazu ausgebildet ist, einen Durchlass des Wassereinspritzrohrs (20) zu schließen oder zu öffnen.

12. Filtervorrichtung nach einem der Ansprüche 9 bis 11, bei der
das Ablassmittel (14, 14', 22, 23, 25) aufweist:
ein erstes Ablassrohr (14, 14') mit dem Einlassabschnitt (14, 15') oder dem Abführabschnitt (14', 15); und
ein zweites Ventil (25), das dazu ausgebildet ist, einen Durchlass des ersten Ablassrohrs (14, 14') zu schließen oder zu öffnen.

13. Filtervorrichtung nach Anspruch 12, bei der
das Ablassmittel (14, 14', 22, 23, 25) ferner aufweist:
ein zweites Ablassrohr (22), das mit einem Inneren des Gehäuses (10) in Verbindung steht; und
ein drittes Ventil (23), das dazu ausgebildet ist, einen Durchlass des zweiten Ablassrohrs (22) zu schließen oder zu öffnen.

14. Automatisches Befeuchtungssystem mit:
der Filtervorrichtung (100, 101, 102) nach einem der Ansprüche 10 bis 13;
einer Flüssigkeitszufuhrvorrichtung (41), die dazu ausgebildet ist, die Flüssigkeit (W) in das Gehäuse (10) der Filtervorrichtung (100, 101, 102) durch das Einspritzmittel (20, 21) zuzuführen; und
einer Steuervorrichtung (42), die dazu ausgebildet ist, einen Ablassvorgang der Filtervorrichtung (100, 101, 102) zu steuern, bei dem
die Steuervorrichtung (42) die Flüssigkeit (W) innerhalb des Gehäuses (10) durch das Ablassmittel (14, 14', 22, 23, 25) automatisch abführt, wenn die Steuervorrichtung (42) erfasst, dass eine vorbestimmte Menge an Flüssigkeit (W) von der Flüssigkeitszufuhrvorrichtung (41) in das Gehäuse (10) zugeführt worden ist.

## Revendications

1. Procédé de remplacement de filtre dans un appareil de filtrage (100, 101, 102), l'appareil de filtrage (100, 101, 102) comprenant :
un boîtier (10) ;
un filtre (1) logé dans le boîtier (10) ;
une partie d'entrée (14, 15') configurée pour introduire un fluide contenant de la poussière dans le boîtier (10) ; et
une partie de décharge (14', 15) configurée pour décharger le fluide filtré par le filtre (1),
le procédé comprenant les étapes consistant à :
injecter un liquide (W) dans le boîtier (10) pour immerger une zone entière d'une surface adhérente de poussière du filtre (1) dans le liquide (W) dans un état où le fonctionnement de l'appareil de filtrage (100, 101, 102) est arrêté ;
décharger le liquide (W) injecté dans le boîtier (10) ;
détacher une partie du boîtier (10) pour exposer le filtre (1) humide à un espace ouvert (Z) après avoir déchargé le liquide (W) ; et
remplacer le filtre (1) humide exposé à l'espace ouvert (Z) par un nouveau filtre (1), dans lequel le liquide (W) est injecté dans le boîtier (10) à travers la partie d'entrée (14, 15') ou la partie de décharge (14', 15) et déchargé à travers la partie d'entrée (14, 15') ou la partie de décharge (14', 15).

2. Procédé de remplacement de filtre selon la revendication 1, dans lequel
le filtre (1) est formé dans une forme tubulaire creuse, et
le liquide (W) est injecté dans le boîtier (10) de manière à immerger une zone entière d'une surface intérieure, d'une surface extérieure ou à la fois de la surface intérieure et de la surface extérieure du filtre (1) dans le liquide (W).

3. Procédé de remplacement de filtre selon la revendication 2, dans lequel un espace interne du filtre (1) est rempli par le liquide (W) injecté dans le boîtier (10) de manière à immerger la zone entière de la surface intérieure du filtre (1) dans le liquide (W).

4. Procédé de remplacement de filtre selon la revendication 2, dans lequel un espace entre la surface extérieure du filtre (1) et une surface intérieure du boîtier (10) est rempli de liquide (W) injecté dans le boîtier (10) de manière à immerger la zone entière de la surface extérieure du filtre (1) dans le liquide (W).

5. Procédé de remplacement de filtre selon la revendication 2, dans lequel un espace interne du filtre (1) et un espace entre la surface extérieure du filtre (1) et une surface intérieure du boîtier (10) sont remplis du liquide (W) injecté dans le boîtier (10) de manière à immerger la zone entière de la surface intérieure et de la surface extérieure du filtre (1) dans le liquide (W).

6. Procédé de remplacement de filtre selon l'une quelconque des revendications 1 à 5, dans lequel une quantité prédéterminée de liquide (W) est injectée dans le boîtier (10).

7. Procédé de remplacement de filtre selon la revendication 6, dans lequel le liquide (W) est automatiquement déchargé lorsque la quantité prédéterminée de liquide (W) est injectée dans le boîtier (10).

8. Procédé de remplacement de filtre dans un appareil de filtrage (100, 101, 102), l'appareil de filtrage (100, 101, 102) comprenant :
un boîtier (10) ;
un filtre (1) logé dans le boîtier (10) ;
une partie d'entrée (14, 15') configurée pour introduire un fluide contenant de la poussière dans le boîtier (10) ; et
une partie de décharge (14', 15) configurée pour décharger le fluide filtré par le filtre (1),
le procédé comprenant les étapes consistant à :
détacher une partie du boîtier (10) pour exposer le filtre (1) à un espace ouvert (Z) dans un état où le fonctionnement de l'appareil de filtrage (100, 101, 102) est arrêté ;
injecter un liquide (W) dans le filtre (1) pour immerger une zone entière d'une surface intérieure du filtre (1) dans le liquide (W) ;
décharger le liquide (W) injecté dans le filtre (1) ; et
remplacer le filtre (1) humide avec le liquide (W) avec un nouveau filtre (1),
dans lequel le liquide (W) est injecté dans le boîtier (10) à travers la partie d'entrée (14, 15') ou la partie de décharge (14', 15) et déchargé à travers la partie d'entrée (14, 15') ou la partie de décharge (14', 15).

9. Appareil de filtrage (100, 101, 102) comprenant :
un boîtier (10);
un filtre (1) logé dans le boîtier (10) ;
une partie d'entrée (14, 15') configurée pour introduire un fluide contenant de la poussière dans le boîtier (10) ;
une partie de décharge (14', 15) configurée pour décharger le fluide filtré par le filtre (1) ;
un moyen d'injection (20, 21) configuré pour injecter un liquide (W) dans le boîtier (10) ; et
un moyen d'évacuation (14, 14', 22, 23, 25) configuré pour décharger le liquide injecté (W), dans lequel
le boîtier (10) a une structure dans laquelle le boîtier (10) comprend une partie détachable, et le filtre (1) est exposé à un espace ouvert (Z) lorsque la partie détachable est détachée, et
le moyen d'injection (20, 21) injecte le liquide (W) de manière à immerger une zone entière d'une surface adhérente de poussière du filtre (1), **caractérisé en ce que** le moyen d'injection (20, 21) injecte le liquide (W) dans le boîtier (10) à travers la partie d'entrée (14, 15') ou la partie de décharge (14', 15), et
le moyen d'évacuation (14, 14', 22, 23, 25) décharge le liquide (W) à travers la partie d'entrée (14, 15') ou la partie de décharge (14', 15).

10. Appareil de filtrage selon la revendication 9, dans lequel
le filtre (1) a une forme tubulaire creuse, et
le moyen d'injection (20, 21) injecte le liquide (W) dans le boîtier (10) de manière à immerger une zone entière d'une surface intérieure, d'une surface extérieure, ou à la fois de la surface intérieure et de la surface extérieure du filtre (1) dans le liquide (W).

11. Appareil de filtrage selon la revendication 9 ou 10, dans lequel
le moyen d'injection (20, 21) comprend :
un tuyau d'injection d'eau (20) communiquant avec la partie d'entrée (14, 15') ou la partie de décharge (14', 15) ; et
une première vanne (21) configurée pour fermer ou ouvrir un passage du tuyau d'injection d'eau (20).

12. Appareil de filtrage selon l'une quelconque des revendications 9 à 11, dans lequel le moyen d'évacuation (14, 14', 22, 23, 25) comprend :
un premier tuyau d'évacuation (14, 14') comprenant la partie d'entrée (14, 15') ou la partie de décharge (14', 15) ; et
une seconde vanne (25) configurée pour fermer ou ouvrir un passage du premier tuyau d'évacuation (14, 14').

13. Appareil de filtrage selon la revendication 12, dans lequel
le moyen d'évacuation (14, 14', 22, 23, 25) comprend en outre :
un second tuyau d'évacuation (22) communiquant avec l'intérieur du boîtier (10) ; et
une troisième vanne (23) configurée pour fermer ou ouvrir un passage du second tuyau d'évacuation (22).

14. Système d'humidification automatique comprenant :
l'appareil de filtrage (100, 101, 102) selon l'une quelconque des revendications 10 à 13 ;
un appareil d'alimentation en liquide (41) configuré pour introduire le liquide (W) dans le boîtier (10) de l'appareil de filtrage (100, 101, 102) à travers le moyen d'injection (20, 21) ; et
un appareil de commande (42) configuré pour commander une opération d'évacuation de l'appareil de filtrage (100, 101, 102), dans lequel
l'appareil de commande (42) décharge automatiquement le liquide (W) à l'intérieur du boîtier (10) à travers le moyen d'évacuation (14, 14', 22, 23, 25) lorsque l'appareil de commande (42) détecte qu'une quantité prédéterminée de liquide (W) a été introduite dans le boîtier (10) à partir de l'appareil d'alimentation en liquide (41).
